(19) Europäisches Patentamt
European Patent Office
Office européen des brevets

(11) **EP 1 797 398 B1**

(12) **EUROPÄISCHE PATENTSCHRIFT**

(45) Veröffentlichungstag und Bekanntmachung des Hinweises auf die Patenterteilung:
**27.04.2011 Patentblatt 2011/17**

(21) Anmeldenummer: 05795069.3

(22) Anmeldetag: **30.09.2005**

(51) Int Cl.:
*G01D 1/02* (2006.01)    *G05B 19/418* (2006.01)

(86) Internationale Anmeldenummer:
**PCT/EP2005/010583**

(87) Internationale Veröffentlichungsnummer:
**WO 2006/034874 (06.04.2006 Gazette 2006/14)**

(54) **VERFAHREN ZUR AUSGABE VON MESSWERTEN UND ANZEIGEEINRICHTUNG**

METHOD FOR EMITTING MEASURING VALUES AND DISPLAY DEVICE

PROCEDE D'EMISSION DE VALEURS DE MESURE ET DISPOSITIF D'AFFICHAGE

(84) Benannte Vertragsstaaten:
**FR GB**

(30) Priorität: **30.09.2004 DE 102004048187**
**27.10.2004 DE 102004052302**

(43) Veröffentlichungstag der Anmeldung:
**20.06.2007 Patentblatt 2007/25**

(73) Patentinhaber: **Immobiliengesellschaft Helmut Fischer GmbH & Co. KG**
**71069 Sindelfingen (DE)**

(72) Erfinder: **FISCHER, Helmut**
**CH-6315 Oberägeri (CH)**

(74) Vertreter: **Maser, Jochen**
**Patentanwälte**
**Mammel & Maser**
**Tilsiter Strasse 3**
**71065 Sindelfingen (DE)**

(56) Entgegenhaltungen:
**US-A1- 2002 022 937    US-A1- 2002 173 935**
**US-A1- 2004 115 359**

**Beschreibung**

Der Gegenstand der Erfindung betrifft ein Verfahren zur Ausgabe von Messwerten, insbesondere bei der Qualitätsprüfung, sowie eine Anzeigeeinrichtung.

Die Durchführung von Qualitätskontrollen während der Herstellung von Gegenständen, wie beispielsweise die Beschichtung einer Karosserie mit Lack und vor der Auslieferung von Gegenständen, ist von erheblicher Bedeutung für die Kundenzufriedenheit und in einigen Fällen auch für die Produktsicherheit. Darüber hinaus werden strenge Eingangskontrollen von gelieferten Produkten durchgeführt, um sicherzustellen, dass den Anforderungen an Qualität und gegebenenfalls Sicherheit entsprechende Teile geliefert und keine schlechten Teile weiterverarbeitet werden. Derartige Qualitätskontrollen müssen innerhalb kürzester Zeit durchgeführt werden. Gleichzeitig ist erforderlich, dass eine schnelle Aussage über die Qualität des Prüfgegenstandes ermöglicht sein soll, um die Kosten für die Qualitätsprüfung gering zu halten. Üblicherweise werden von einem Prüfgegenstand ein oder mehrere Messwerte erfasst, die an eine Messwertverarbeitung sowie eine Messwertausgabe weitergeleitet werden. Die ermittelten Daten werden erfasst und in Listen ausgeben. Der Benutzer kann jedoch nicht in einfacher und schneller Weise erkennen, ob die erfassten Messwerte den Vorgaben bezüglich den Toleranzbereichen entsprechen. Es ist ein aufwändiger Einzelvergleich der ermittelten Werte und der geforderten Werte erforderlich, um die Schlechtteile von den Gutteilen zu trennen. Dies ist insbesondere bei Messverfahren der Fall, bei denen elektronisch über Messeinrichtungen Messsignale erfasst und von einer Signalerfassungseinrichtung in einer Anzeige ausgegeben werden. Darüber hinaus ist eine Zuordnung der einzelnen Messwerte zu einem Messpunkt oder Messfläche nicht möglich.

Aus der US 2002/0173935 A1 geht ein Verfahren zur Überwachung von Werkzeugmaschinen während der Produktion von Werkzeugen hervor. Dabei werden an einzelnen Messpunkten Messwerte erfasst. Von diesen einzelnen Messwerten an den jeweiligen Messpunkten werden jeweils die Mittelwerte gebildet. Diese Mittelwerte werden dann in eine Art Diagramm aufgetragen, wobei jeweils eine vertikale Linie einem Messpunkt zugeordnet wird und an der vertikalen Linie der Mittelwert der jeweiligen Messstelle aufgetragen wird. Ergänzend wird der größte und der kleinste Mittelwert aufgetragen sowie die dazugehörigen Standardabweichungen entlang der vertikalen Linie aufgetragen. Die an den vertikalen Linien der einzelnen Messpunkte aufgetragenen Mittelwerte werden anschließend durch Wellenlinien miteinander zu einem Wellenliniendiagramm verbunden. Eine einfache Auswertung und Erfassung der Messwerte als auch die einfache Erkennung von Abweichungen oberhalb und unterhalb vorgegebener Toleranz ist durch ein solches Wellendiagramm nicht oder nur sehr schwer möglich.

Der Erfindung liegt deshalb die Aufgabe zugrunde, ein Verfahren zur Ausgabe von Messwerten sowie eine Anzeigeeinrichtung zur Durchführung des Verfahrens zu schaffen, durch das unmittelbar nach Durchführung einer Anzahl von Einzelmessungen eine Aussage über die Qualität des oder der Prüfgegenstände ermöglicht ist.

Diese Aufgabe wird erfindungsgemäß durch die Merkmale des Anspruchs 1 und des Anspruchs 12 gelöst. Weitere vorteilhafte Ausführungsformen sind in den weiteren Ansprüchen angegeben.

Das erfindungsgemäße Verfahren weist den Vorteil auf, dass sehr schnell eine qualitative Aussage über den oder die Prüfgegenstände ermöglicht ist. Das die Prüfung durchführende Personal kann unmittelbar nach Durchführung einer Messung erkennen, ob der oder die Prüfgegenstände oder Elemente der Prüfgegenstände die verschiedenen Anforderungen gemäß den vorgegebenen Qualitätsbedingungen erfüllen.

Nach der Durchführung der Messung wird in einer Anzeige nach Durchlaufen mehrerer Schritte zur Prüfung der Messwerte ein Diagramm ausgegeben, bei dem die Mittelwerte einzelner Messreihen auf eine Gerade projiziert werden. Die Gerade wird zwischen einem minimalen und einem maximalen Mittelwert gebildet, wobei auf der Geraden die Rangwerte oder die Messreihen beziehungsweise Stichproben aufgetragen sind. Gleichzeitig stehen die Mittelwerte im Verhältnis zu einem oberen und unteren Grenzwert oder Grenzlinie. Dadurch wird für das die Prüfung durchführende Personal sofort ersichtlich, ob ein Prüfgegenstand die vorgegebenen Anforderungen erfüllt, also ob die Mittelwerte innerhalb, teilweise außerhalb oder außerhalb der Grenzwerte liegen. Die Darstellung der Mittelwerte auf einer Geraden ermöglicht die Erkennung einer gleichmäßigen Produktion, durch mehrere beieinander liegende Mittelwerten. Abweichungen sind ebenfalls durch einen größeren Abstand der Mittelwerte entlang der Geraden zum nächstfolgenden Mittelwert oder Gruppe von Mittelwerten aufgetragen und somit sofort erkennbar.

Nach einer vorteilhaften Ausgestaltung der Erfindung ist vorgesehen, dass zu jedem Mittelwert auf der Geraden, die nach dem Rangwert oder durch Angabe der Messreihe aufgetragen sind, ein Vertrauensbereich dargestellt wird. Der Vertrauensbereich entspricht beispielsweise der dreifachen Standardabweichung. Dadurch verlaufen eine obere und untere Grenze des Vertrauensbereiches hyperbelförmigen zur Geraden, auf der die Rangmittelwerte aufgetragen sind. Dadurch lässt sich insbesondere nahe einer oberen oder unteren Grenzlinie zum Sollwert oder Grenzwert des Vertrauensbereiches erkennen, in welchem Umfang die Einzelmessungen noch innerhalb oder außerhalb des Grenzwertes oder der Grenzlinien liegen. Zusätzlich kann der Vertrauensbereich durch Regressionsgeraden dargestellt werden.

Nach einer weiteren vorteilhaften Ausgestaltung der Erfindung ist vorgesehen, dass auf der Anzeige vorzugsweise automatisch oder auf Anforderung des Benutzers durch Betätigen einer Taste an einem Bedienfeld, die im Grenzbereich des Vertrauensbereiches oder außerhalb des Vertrauensbereiches liegenden Messwerte des oder der Prüfgegenstände angezeigt werden. Bei der Anzeige der im Grenzbereich oder außerhalb des Vertrauensbereiches liegenden Messstelle eines Prüfgegenstandes kann das Personal sofort die Problemstelle erkennen und entsprechend weitere Maßnahmen einleiten. Beispielsweise ist bei einer laufenden Produktion, in der Gehäuse oder Karosserien lackiert werden, ermöglicht, dass bei einer Messung von mehreren Elementen dasjenige Element unmittelbar erfasst wird, das beispielsweise eine zu dicke oder zu dünne Lackschicht aufweist. Dadurch können während der laufenden Produktion einzelne Prozessparameter unmittelbar entsprechend nachgesteuert werden. Handelt es sich um Zulieferteile, die zur Prüfung anstehen, kann dem Lieferanten unmittelbar die Stelle oder der Bereich für die Nacharbeit mitgeteilt werden. Sofern der Prüfgegenstand nur eine Messstelle umfasst und mehrere Prüfgegenstände nacheinander innerhalb einer Messreihe oder Stichprobe geprüft wurden und der zumindest eine Rangwert der Mittelwerte außerhalb des Grenzbereiches des benachbarten Bereiches oder außerhalb des benachbarten Bereiches liegt, kann der Prüfgegenstand oder das Element exakt ermittelt und aussortiert oder die Produktion entsprechend korrigiert und nachgesteuert werden. Analoges gilt für Messwerte, die außerhalb eines oberen und unteren Grenzwertes liegen.

Nach einer vorteilhaften Ausgestaltung des Verfahrens ist vorgesehen, dass dem Benutzer die außerhalb des oberen und unteren Grenzwertes oder außerhalb des Vertrauensbereiches liegenden Rangwerte in der Anzeige abweichend in Farbe und/oder Gestalt vor der innerhalb des Vertrauensbereiches oder der unteren und oberen Grenzlinie liegenden Rangwerte angezeigt werden. Durch die optische Hervorhebung der innerhalb oder außerhalb eines Bereiches liegenden Rangwerte oder der dazu gehörigen Einzelmesswerte wird eine zusätzliche Signalisierung für das Personal gegeben. Vorteilhafterweise kann vorgesehen sein, dass die außerhalb des Vertrauensbereiches liegenden Rangwerte durch eine Signalfarbe, beispielsweise rot und/oder einen entsprechenden Hintergrund durch eine Farbe und/oder Schraffur, hervorgehoben werden, wobei die innerhalb des Vertrauensbereiches oder der oberen und unteren Grenzlinie liegenden Rangwerte durch eine entsprechende Anzeige, Schraffur und/oder Hintergrund, beispielsweise grün, kenntlich gemacht werden. Zusätzlich kann eine obere und untere Grenzlinie durch eine dritte Farbe, Schraffur oder sonstige Kennzeichnung dargestellt werden.

Nach einer weiteren vorteilhaften Ausgestaltung des Verfahrens ist vorgesehen, dass eine Streuung der Messwerte zu den jeweiligen Mittelwerten angezeigt wird. Diese Streuung wird durch einen Balken dargestellt, der sich oberhalb und unterhalb des Mittelwertes erstreckt und den größten und kleinsten Messwert einer Messreihe umfasst. Dadurch kann eine exaktere Analyse und Auswertung ermöglicht sein. Bei einer laufenden Produktion, deren Qualität nach und nach optimiert wird, kann ein präziser Rückschluss und Eingriff zur Einstellung von einzelnen Parametern durch eine Vergrößerung oder Verkleinerung eine solchen Balkens gegeben sein.

Der Vertrauensbereich beziehungsweise die Standardabweichung wird vorteilhafterweise auf einen vorbestimmten prozentualen Anteil eingestellt. Dadurch wird bestimmt, welcher prozentuale Anteil aller Messwerte als "Gutteil" angenommen wird und welcher restliche prozentuale Anteil außerhalb der vorgegebenen Toleranz liegt. Der Vertrauensbereich gibt somit eine Streuung innerhalb des Mittelwertes vor, der für zulässig erachtet wird.

In einem weiteren Verfahrensschritt zur Ermittlung eines Ergebnisses ist vorgesehen, dass jede Messreihe auf eine Normalverteilung der Einzelmesswerte geprüft wird. Durch eine solche Prüfung wird festgestellt, ob signifikante Unterschiede zwischen den Messwerten einer Messreihe gegeben sind, so dass für die nachfolgenden Schritte zur Auswertung der Messergebnisse eine Grundlage geschaffen ist, die voraussetzt, dass jeder Messwert mit einer hohen Wahrscheinlichkeit den Mittelwert der Messreihe zuzuordnen ist.

Nach einem weiteren vorteilhaften Schritt zur Auswertung des Messergebnisses ist vorgesehen, dass die Homogenität der Varianzen der Messreihen geprüft wird. Diese Prüfung sowie die vorangestellten Prüfungen auf Normalverteilung der Messwerte einer Messreihe können eine Voraussetzung bilden, ob eine Varianzanalyse beziehungsweise Streuungszerlegung durchgeführt werden kann. Im Falle von homogener Varianz, das heißt, dass keine signifikanten Unterschiede ermittelt wurden, kann anschließend eine Varianzanalyse durchgeführt werden, um homogene Untergruppen zu bilden. Wenn signifikante Unterschiede zwischen den Mittelwerten ermittelt werden, werden homogene Gruppen gebildet, die durch weitere Methoden in solche Untergruppen separiert werden. Durch eine solche Gruppenbildung kann eine einfache Aussage getroffen werden, ob die Mittelwerte vergleichbar sind, das heißt, ob beim Vergleich von mehreren beschichteten Gegenständen oder Anlagen, die eine Schichtdicke auftragen, vergleichbare Schichtdicken oder Verhältnisse vorliegen oder ob ein Nachjustieren oder Nachregeln erforderlich ist.

Nach einer weiteren vorteilhaften Ausgestaltung des Verfahrens ist vorgesehen, dass in einem weiteren Schritt nach der Prüfung der Normalverteilung der Messwerte und der Prüfung der Homogenität der Varianzen für die Mittelwerte der einzelnen Messreihen beziehungsweise Messstellen eine Signifikanzprüfung durchgeführt wird. Die Signifikanz ist eine Größe, die zum Vertrauensniveau gehört und eine Aussage darüber ermöglicht, ob die Mittelwerte jeder Messreihe einander zugehörig sind Eine Signifikanz ist dann gegeben, sobald die Bedingung erfüllt ist, dass $F_{Beob} > F_{tab}$ ist, wobei sich $F_{Beob}$ ergibt aus dem Quotienten der Varianz II

$$S_{II}^2 = \frac{\Sigma (x - xi)^2}{j - 1} n$$ (Summe der Mittelwerte jeder Messreihe zum Mittelwert aller Messreihen in Abhängigkeit der Anzahl der Messreihen) und der Varianz I

$$S_I^2 = \frac{1}{j} \Sigma Si^2$$ (Summe der einzelnen Standardabweichungen im Quadrat in Abhängigkeit der Anzahl der Einzelmessungen). Diese Signifikanzprüfung, die durch verschiedene Methoden durchgeführt werden kann, dient zur Bildung von homogenen Untergruppen. Solche Mittelwerte, die einer Untergruppe zugeordnet werden, können in gleicher Kennung und/oder Farbe dargestellt werden, so dass dem Benutzer sofort die Zugehörigkeit der einzelnen Mittelwerte zu einer Gruppe offensichtlich wird.

Nach einer weiteren vorteilhaften Ausgestaltung des Verfahrens ist vorgesehen, dass die Anzahl der Einzelmessungen von Messstellen eines Prüfgegenstandes gleich ist. Bei einer gleichen Anzahl von Einzelmessungen je Messstellen an einem Gegenstand spricht man von einer balancierten Auswertung. Alternativ kann vorgesehen sein, dass eine unterschiedliche Anzahl von Einzelmessungen je Messstelle erfasst wird, so dass von einer unbalancierten Auswertung gesprochen wird. Eine unbalancierte Auswertung ist zumeist dann erforderlich, wenn beispielsweise eine sehr kleine Fläche an einem Gehäuse im Zusammenhang mit einer großen Fläche an demselben Gehäuse zu prüfen ist und die kleinen Flächen nur eine geringe Anzahl von Messpunkten ermöglicht.

Nach der Signifikanzprüfung kann dem Benutzer durch Ausgabe von nicht signifikant voneinander verschiedenen Mittelwerten sofort dargelegt werden, welche Elemente, insbesondere von unterschiedlichen Prüfgegenständen, beziehungsweise Teilbereiche mit den entsprechenden Rangwerten zusammengehören. Des Weiteren kann durch die Signifikanzprüfung festgestellt werden, welche Mittelwerte eine Untergruppe bilden und wiederum in sich homogen sind. Durch die verschiedenen Untergruppen kann somit ein Rückschluss gezogen werden, welche der Teile mit der Beschichtung innerhalb der Toleranzen liegen und ob gegebenenfalls systematische Fehler vorliegen.

Gleichzeitig kann durch Angeben von Grenzen, beispielsweise im Sinne der Regelkarten, festgestellt werden, bei welchen Elementen oder Produktgruppen Korrekturen erforderlich sind. Durch die Korrektur von Elementen oder Produktgruppen im Einzelnen kann sich die Steigung der Geraden, auf der die Mittelwerte dem Rang nach aufgetragen sind, verringern, so dass beispielsweise vorher nicht eingehaltene Toleranzgrenzen nunmehr prozesstechnisch beurteilt werden können. Ein Produktionsverfahren ist dann ideal unter Kontrolle, wenn zwischen den einzelnen Elementen oder Teilbereichen keine signifikanten Unterschiede mehr nachgewiesen werden können. Dadurch können systematische Unterschiede zwischen den Elementen eliminiert werden. Dies bedeutet beispielsweise bei der Prüfung von Lackschichten, dass die Elemente einen Bereich gleicher Lackschichtdicke aufweisen unter Berücksichtigung der Stichproben, die in der Regel nicht mit den gleichen Elementen des Einzelobjektes übereinstimmen beziehungsweise teilweise übereinstimmen.

Bevorzugt wird die Signifikanzprüfung vor Anlauf einer Serienproduktion in einem Probelauf oder einem Vorlauf durchgeführt. Dadurch kann die Einstellung des Prozesses zur Herstellung eines Gegenstandes optimiert werden. Somit können Verluste bei einer anlaufenden oder laufenden Serienfertigung verhindert werden. Durch die Anzeige der nicht signifikant voneinander verschiedenen Mittelwerte in einer gleichen Kennung oder Farbe, in einem gemeinsamen Bereich entlang der Y-Koordinate, wird für das Prüfpersonal sofort ersichtlich, in welcher Qualitätsstufe sich der Prozess befindet. Sofern die Mittelwerte in gleicher Farbe oder in einem gemeinsamen Bereich dargestellt werden, ist der zu prüfende Prozess, der Vorlauf zur Serienfertigung oder dergleichen optimal eingestellt. Sofern unterschiedliche Farben oder unterschiedliche Bereiche dargestellt werden, denen die Mittelwerte zugeordnet sind, bedarf es einer Nachsteuerung, wobei durch die Anpassung der signifikant verschiedenen Mittelwerte zur Erhöhung der Prozessfähigkeit beigetragen und folglich die Verluste minimiert werden können.

Die erfindungsgemäße Aufgabe wird durch eine Anzeigeneinrichtung gemäß dem Anspruch 12 gelöst. Diese Anzeigeeinrichtung umfasst einen Anschluss für eine Messvorrichtung, an der eine Messvorrichtung zur Durchführung von Einzelmessungen anschließbar ist. Die einzelnen Messwerte werden in einer in der Anzeigeeinrichtung vorgesehenen Auswerteeinrichtung mit einem elektronischen Rechner erfasst und jeweils einer Messreihe zugeordnet. Aus einer Anzahl von Einzelmessungen einer Messreihe werden durch die Auswerteeinheit Mittelwerte ermittelt, die in einem Diagramm, auf eine Gerade projizierend ausgegeben werden, wobei sich die Gerade zwischen dem größten und kleinsten Mittelwert erstreckt. Dadurch ist für das Bedienpersonal oder Prüfpersonal in einfacher Weise das Ergebnis der Qualitätsprüfung in übersichtlicher Weise ersichtlich.

Nach einer vorteilhaften Ausgestaltung der Erfindung ist vorgesehen, dass an dem Anschluss eine als Messsonde ausgebildete Messvorrichtung vorgesehen ist, die zur Messung der Dicke dünner Schichten vorgesehen ist. Die Schichtdickenmessung kann beispielsweise durch eine magnetinduktive Methode erfolgen, in dem beispielsweise nichtmagnetische Schichten auf einem ferromagnetischen Grundwertstoff erfasst werden, wie zum Beispiel Zink, Chrom, Kupfer, Zinn beziehungsweise Farbe, Lack, Kunststoff, Email, Eisen oder Stahl. Ebenso kann die sogenannte Wirbelstrommethode durchgeführt werden, bei der elektrisch nichtleitende Schichten auf NE-Metallen ermittelt werden, wie zum Beispiel Farbe, Lack oder Kunststoff auf Aluminium, Messing oder Zink sowie anodisierte Schichten auf Aluminium. Die erfindungsgemäße Anzeigeeinrichtung ist hierauf nicht beschränkt und kann ebenfalls eine Messvorrichtung zur Messung von Schichtdicken nach der Röntgenfluoreszenzmethode oder weiterer Strahlungsmethoden sowie ein Mikrohärtemesssystem oder dergleichen umfassen. Weitere Messsonden oder Prüfgeräte zur Erfassung von Messwerten können ebenfalls an die Anzeigeeinrichtung angeschlossen werden.

Nach einer weiteren vorteilhaften Ausgestaltung der Anzeigeeinrichtung ist vorgesehen, dass eine Messvorrichtung in der Anzeigeeinrichtung integriert ist. Die Messvorrichtung ist an die jeweilige Messaufgabe angepasst. Dadurch wird ein Prüfgerät bereitgestellt, das eine einfache Handhabung und qualifizierte Aussage über die Qualität eines Prüfgegenstandes ermöglicht.

Die Erfindung sowie weitere vorteilhafte Ausführungsformen und Weiterbildungen derselben werden im Folgenden anhand den in den Zeichnungen dargestellten Beispielen näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:

Figur 1    eine schematische Darstellung eines Prüfgegenstan- des,

Figur 2    ein Diagramm von erfassten Messwerten aus Ein- zelmessungen,

Figur 3    eine Tabelle der Einzelmessungen gemäß Figur 2,

Figur 4    ein Diagramm, bei dem Mittelwerte aus Einzelmes- sungen gemäß Figur 3 einer Rangfolge nach darge- stellt sind,

Figur 5a   ein Diagramm, bei dem die nicht signifikant ver- schiedenen Mittelwerte durch gleiche Kennzeichen dargestellt sind,

Figur 5b   ein weiteres Diagramm, bei dem die nicht signifikant verschiedenen Mittelwerte reduziert sind und

Figur 6    ein Diagramm, in welchem die Mittelwerte dem Rang nach für mehrere Prüfgegenstände dargestellt sind.

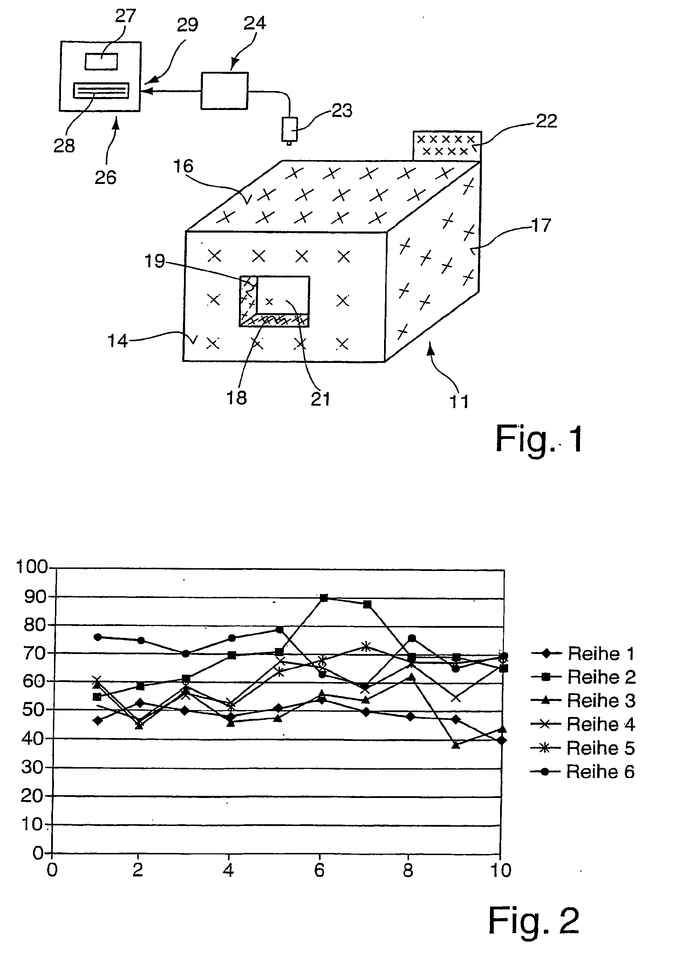

In Figur 1 ist beispielhaft ein Prüfgegenstand 11 in Form eines Gehäuses dargestellt. Es kann sich beispielsweise auch um eine Karosserie eines Fahrzeuges zu Wasser, zu Lande und in der Luft oder sonstige Gegenstände handeln. Dieser Prüfgegenstand 11 ist beispielsweise beschichtet, und die Qualitätsprüfung dieses Prüfgegenstandes 11 erfordert, dass eine vorgegebene gleichmäßige Schichtdicke innerhalb eines Toleranzbereiches auf dem Prüfgegenstand 11 aufgebracht ist. Zur Prüfung des Prüfgegenstandes 11 ist vorgegeben, dass mehrere, beispielsweise sechs Messbereiche oder Messstellen, zu kontrollieren sind. Hierzu gehören eine Vorderseite 14, eine Oberseite 16, eine Seitenfläche 17, eine Umkantung 18 und 19 in einer Öffnung 21 sowie eine Haltelasche 22 an der Oberseite 16. Nach einem Schmetterlingsdiagramm, das die einzelnen zu prüfenden Flächen umfasst, werden in einer vorgegebenen Reihenfolge die einzelnen Flächen oder Messbereiche nacheinander geprüft. An jeder Messstelle 14, 16, 17, 18, 19, 21 sollen zum Beispiel zehn Einzelmessungen zur Erfassung von Messwerten durchgeführt werden. Die Messpunkte sind durch ein Kreuz dargestellt. Die Einzelmessungen werden mit einer Messsonde 23 einer Messvorrichtung 24 zur Schichtdickenmessung durchgeführt. Es kann auch an derselben Messstelle die Anzahl der Einzelmessungen einer Messreihe durchgeführt werden. Die Messvorrichtung 24 ist über einen Anschluss an eine Anzeigeneinrichtung 26 angeschlossen oder in einer Anzeigeneinrichtung 26 oder umgekehrt integriert. Die Anzeigeeinrichtung 26 umfasst zumindest eine Auswerteeinrichtung mit einem elektronischen Rechner, eine Anzeige 27, in der die ermittelten Messwerte aus den Einzelmessungen sowie die weiteren Daten zur Beurteilung der Qualitätsprüfung ausgewertet und in der Anzeige 27 erfasst und angezeigt werden und auch auf verschiedene Parameter abgefragt werden können. Zur Betätigung der Anzeigeeinrichtung 26 ist eine Bedienoberfläche 28 vorgesehen.

In Figur 2 ist ein Diagramm dargestellt, das in der Anzeige 27 der Anzeigeeinrichtung 26 ausgegeben werden kann, in dem auf der X-Achse die Anzahl der Einzelmessungen und auf der Y-Achse die erfassten Messwerte, beispielsweise die Schichtdicke in $\mu m$, aufgetragen ist. Die dargestellte Messreihe 1 zeigt die Messung auf der Vorderseite 14, die Messreihe 2 die auf der Oberseite 16 usw.

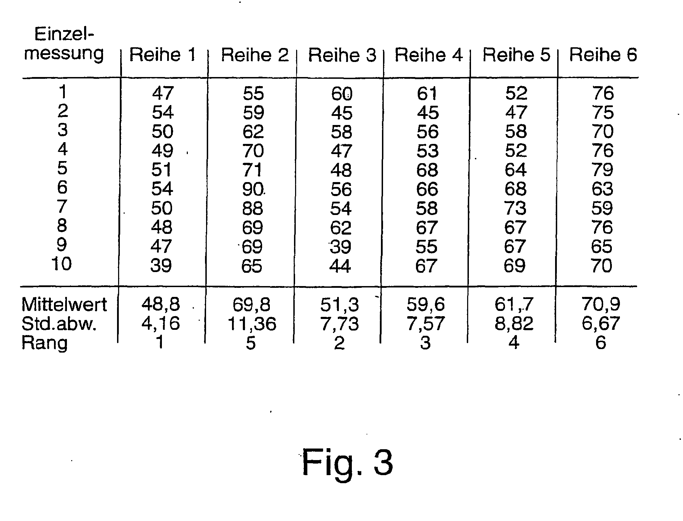

In Figur 3 sind die Einzelmesswerte innerhalb der beispielhaft aufgeführten Messreihen 1 bis 6 tabellarisch zu jeder Messstelle 14 bis 21 zugeordnet. In einem ersten Schritt wird geprüft, ob die Messreihe einer Normalverteilung genügt. Von jeder Messreihe 1 bis n wird der Mittelwert und die dazugehörige Standardabweichung ermittelt. Durch die Standardabweichung wird bestimmt, ob beispielsweise Rang 1 und Rang 2 voneinander signifikant verschieden oder ob diese nicht voneinander signifikant verschieden sind und eine homogene Untergruppe bilden können. Es wird für jede Messstelle 14 bis 21 bevorzugt eine gleiche Anzahl von Messwerten zur Bildung der Mittelwerte erfasst. Dadurch werden balancierte Mittelwerte zur Rangbestimmung zugrunde gelegt. Alternativ können auch die Rangwerte aus unbalancierten Mittelwerten gebildet werden. In Abhängigkeit hiervon ist die Signifikanz der Abweichungen zu bewerten.

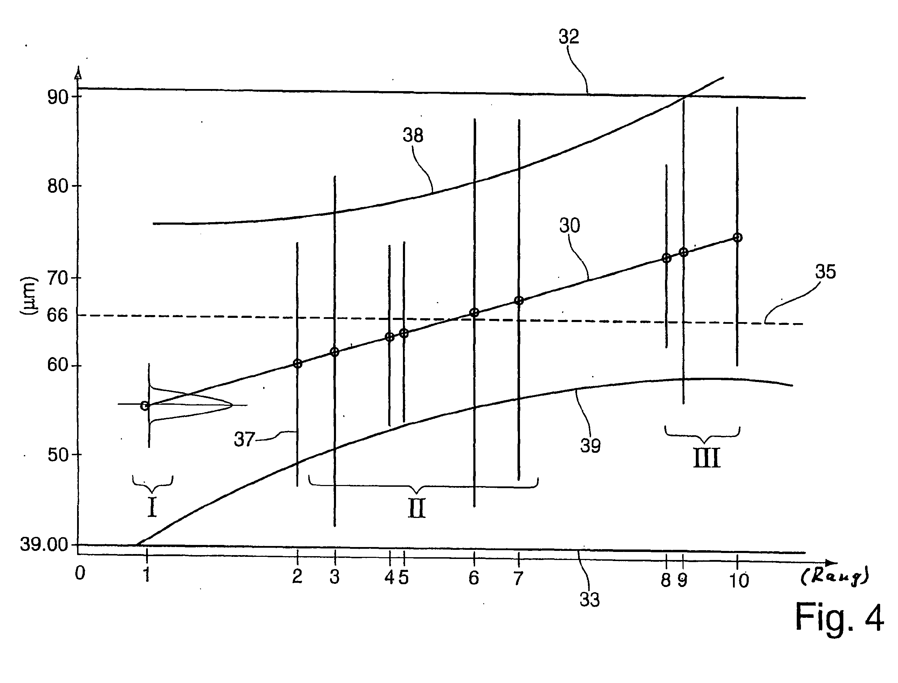

Um eine Aussage über die Qualität der Schichtdicke auf einer Oberfläche des oder der Prüfgegenstände 11 oder der zu prüfenden Parameter beziehungsweise Größen zu erhalten, werden in einem weiteren Schritt die Mittelwerte der einzelnen Messwerte an jeder Messstelle 14 bis 21 dem Rang nach sortiert und auf eine Geraden 30 projiziert. Der höchste und der niedrigste Mittelwert bilden die Ausgangspunkte für die sich dazwischen erstreckenden Geraden 30. Diese Darstellung eines Diagramms gemäß Figur 4 wird in der Anzeige 27 ausgegeben. Die x-Achse kann die Ränge 1 ... n und die y-Achse die Schichtdicke zeigen. Die X-Achse ist vorzugsweise als Merkmalsachse dargestellt, das heißt, dass die Nummer der Messreihe aufgetragen ist. Dadurch sind einfache Rückschlüsse möglich.

In der Anzeige 27 wird des Weiteren der obere Grenzwert 32 und untere Grenzwert 33 dargestellt, der einen Toleranzbereich zu einer vorgegebenen Sollschichtdicke gemäß der Kennlinie 35 bildet. Dieser obere und untere Grenzwert 32, 33 steht in Abhängigkeit von Vorgaben zu zulässigen prozentualen oder absoluten Abweichungen.

Zu jedem Mittelwert ist durch einen vertikalen Balken 37 die Streubreite der einzelnen Messwerte in einer Messstelle 14 bis 21 zum daraus ermittelten Mittelwert dargestellt. Dabei werden alternativ entlang des Balkens 37 Einzelpunkte dargestellt, die die Messwerte einer Messstelle bilden. Die Balken 37 der Rangwerte 3 und 7 zeigen, dass eine sehr große Streuung der Einzelmessungen gegeben ist, die teilweise sogar außerhalb dem Vertrauensbereich liegen.

Der jeweilige Abstand der einzelnen Rangwerte oder einer Gruppe von Rangwerten zueinander zeigt eine hohe oder geringe Gleichmäßigkeit der ermittelten Schichtdicken an den jeweiligen Messstellen 14 bis 21. Beispielsweise zeigt der Rangwert 1 im Bereich I, dass dieser deutlich von den Rangwerten 2 bis 7 im Bereich II abweicht. Somit kann unmittelbar ermittelt werden, dass es sich beim Rangwert 1 um eine Messstelle handelt, die deutlich gegenüber den Üblichen abweicht. Die Zuordnung der einzelnen Mittelwerte zur jeweiligen Untergruppe erfolgt in Abhängigkeit der Voraussetzungen auf verschiedene Weisen. Sofern beispielsweise bei allen Messreihen eine Normalverteilung der Einzelmessungen vorliegt, erfolgt im Anschluss daran ein Test auf Homogenität der Varianzen der einzelnen Messreihen. Wird bei dieser Prüfung keine Signifikanz festgestellt, erfolgt nachfolgend eine unbalancierte Varianzanalyse. Sofern durch diese unbalancierte Varianzanalyse eine Signifikanz festgestellt wird, erfolgt eine Gruppenbildung. Andernfalls unterbleibt eine Untergruppenbildung. Werden durch den Test der Homogenität der Varianzen der Messreihen signifikante Unterschiede festgestellt, so wird ein weiterer Test durchgeführt, der wiederum bei der Feststellung von Signifikanz eine Untergruppe festlegt.

Sofern beim Test auf Normalverteilung aller Messreihen mindestens eine Messreihe nicht normal verteilt wird, erfolgt ein weiterer Test zur Feststellung der Signifikanz. Sofern signifikante Unterschiede bei den Messreihen festgestellt werden, erfolgt erneut ein Test auf Homogenität der Varianzen der Messreihen. Daran anschließend wird sowohl bei Feststellung einer Signifikanz als auch bei Feststellung, dass keine Signifikanz vorliegt, die Untergruppenbildung nach einer Kreuztabellenmethode durchgeführt. Die Festlegung der Untergruppen ermöglicht eine leichtere Nachjustierung einzelner Parameter in der Produktion oder Feststellung von systematischen Fehlern bei hergestellten Produkten.

Durch die Zuordnung des Rangwertes zum Mittelwert und dieser wiederum zur Messreihe ist die Messstelle zu rekapitulieren, so dass eine einfache und schnelle Auswertung geschaffen ist. Dadurch kann beispielsweise in einfacher Weise ermittelt werden, dass die vordere Seite des Gehäuses eine zu geringe Lackschicht aufweist und dementsprechend die Lackierstation neu eingestellt wird.

Der Bereich II zeigt, dass die Rangwerte im Wesentlichen in regelmäßigen Abständen zueinander angeordnet sind, so dass eine hohe Gleichmäßigkeit bezüglich dem Mittelwert der Schichtdicken gegeben ist. Die Mittelwerte können somit bei der Beurteilung in Relation zueinander gesetzt werden und unterscheiden sich nicht signifikant voneinander.

Aus der Steigung der Geraden 30 ist zu ersehen, dass die Mittelwerte alle innerhalb des oberen und unteren Grenzwertes 32 und 33 liegen. Je flacher die Steigung der Geraden 30 ist, desto geringer ist die Toleranz der Mittelwerte untereinander zum Sollwert und je höher ist die Gleichmäßigkeit der hergestellten Produkte.

Liegen die Mittelwerte nahe dem Sollwert und weisen ein flache oder keine Steigung auf, sind hohe Qualitätsstufen in der Herstellung der Prüfgegenstände 11 gegeben.

Bei dem Rangwert 1 ist beispielsweise zusätzlich die Normalverteilung dargestellt. Diese Normalverteilung ist für jeden Rangwert 1 bis n abgespeichert und kann vorteilhafterweise einzeln abgefragt werden. Somit kann die Streuung um den Mittelwert durch die Normalverteilung zusätzlich dargestellt werden.

Zu jedem Mittelpunkt kann der Vertrauensbereich für die Einzelmesswerte zugrunde gelegt werden. Durch die Kennlinien 38, 39 wird der Vertrauensbereich der Einzelwerte, der einen hyperbelförmigen Verlauf aufweist, dargestellt. Dieser entspricht beispielsweise der dreifachen Standardabweichung und wird zum jeweiligen Mittelwert aufgetragen.

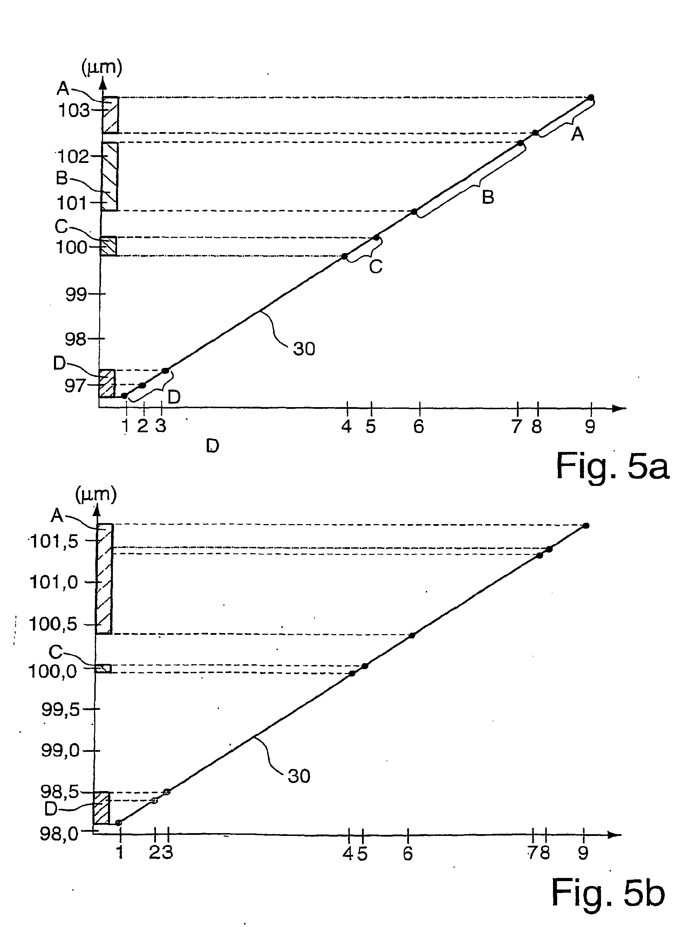

In Figur 5a ist ein Diagramm dargestellt, bei dem die nicht signifikant voneinander verschiedenen Mittelwerte durch gleiche Kennzeichen A, B, C .... usw. dargestellt sind. Beispielsweise sind die Mittelwerte entlang einer Geraden durch unterschiedliche Farben oder Symbole gekennzeichnet. Somit wird ersichtlich, dass die Mittelwerte der Ränge 1 bis 3, die Mittelwerte der Ränge 4 und 5, die Mittelwerte der Ränge 6 und 7 sowie die Mittelwerte der Ränge 8 und 9 nicht signifikant voneinander verschieden sind, jedoch die einzelnen Gruppen A, B, C, D der Rangwerte untereinander sich signifikant voneinander unterscheiden. Anstelle einer farbigen Darstellung können auch unterschiedliche Symbole entlang der Geraden 30 verwendet werden. Nach einer bevorzugten alternativen Ausgestaltung ist vorgesehen, dass entlang der Ordinate eine Balkendarstellung ausgegeben wird, die sich über den Bereich der Mittelwerte von sich nicht signifikant voneinander verschiedenen Mittelwerten erstreckt. Des Weiteren kann vorteilhafterweise vorgesehen sein, dass für die jeweilige Untergruppe ein Untergruppenmittelwert als Orientierungshilfe in der gleichen Farbe als horizontale Gerade dargestellt und der Messwertbereich der Untergruppe als gleichfarbiger Balken an der Messwertachse ausgegeben wird. In Figur 5a sind beispielsweise vier Gruppen A bis D entlang der Ordinate ausgegeben. Dem Bedienpersonal wird somit sofort vor Augen geführt, dass ein Prozess nicht optimal eingestellt ist. Bei einer optimalen Einstellung eines Prozesses wird nur eine Kennung, ein Balken beziehungsweise nur eine Farbe für die Rangwerte angezeigt.

Ein solches Ergebnis gemäß Figur 5a kann beispielsweise für eine Vorserienfertigung oder einen Vorlauf erzielt werden. Zur Erhöhung der Prozesssicherheit werden beispielsweise die Ränge 8 und 9 aus dem oberen Bereich nach unten gesteuert. Dies bedeutet, dass die Prozessparameter, die für die dem Mittelwert des Ranges 8 oder 9 zugrunde liegende Messstelle verantwortlich sind, nach unten korrigiert werden, so dass beim Beispiel der Messung einer Lackschichtdicke die Messstellen mit einer geringeren Lackschicht versehen werden. Bei nochmaliger Durchführung einer Messung kann sich beispielsweise daraus das Ergebnis gemäß der Anzeige in Figur 5b ergeben. Daraus wird ersichtlich, dass die nicht signifikant voneinander verschiedenen Mittelwerte sich auf drei Teilbereiche B, C, D oder drei zusammengehörende Elemente verringert haben. Gleichzeitig wird die Steigung der Geraden 30 verringert. Dies deutet darauf hin, dass die Prozessfähigkeit verbessert wurde.

In einem nächsten Schritt könnten die Ränge 1, 2 und 3 entsprechend nach oben gesetzt werden. Dies bedeutet, dass die dortigen Lackschichten mit einer erhöhten Schichtdicke versehen werden. Aus dieser Systematik wird offensichtlich, dass exakt auf die einzelnen Prozessparameter zurückgeschlossen werden kann, deren Ursachen analysierbar sind und folglich zur schnellen Einstellung der Prozessparameter führen.

Durch eine solche Darstellung kann darüber hinaus die Aussage getroffen werden, ob der Verlauf der Geraden 30 insgesamt zu hoch oder zu niedrig ist. Die Darstellung der Steigung der Geraden 30 und deren Position relativ zum Sollmittelwert ermöglicht eine schnelle Aussage hierüber.

Die in den Figuren 5a und 5b gewählte Darstellung kann auch für die Durchführung von Stichproben gewählt werden, um darzustellen, welche gleichen Elemente oder Teilbereiche von verschiedenen Elementen oder Prüfgegenständen nicht signifikant voneinander verschiedene Einzelwerte umfassen. Dadurch können Trends oder Tendenzen in einem Fertigungsablauf erkannt werden, die möglicherweise zu korrigieren sind.

Durch solche Darstellungen wird eine Gesamtschau gleicher Elemente durch deren Zusammenfassung ermöglicht oder anders ausgedrückt, Elemente, die voneinander verschieden sind, werden in offensichtlicher Weise dargestellt, so dass der Benutzer gezielt in den Fertigungsprozess eingreift und entsprechend optimieren und nachsteuern kann.

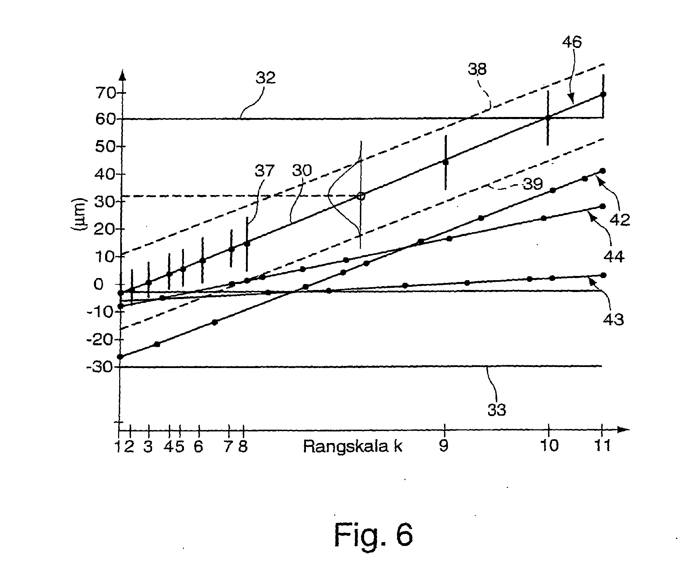

Die Anzeige gemäß Figur 6 zeigt ein Diagramm, bei welchem von mehreren Prüfgegenständen 11 die Kennlinie gemäß Figur 4 in einem Diagramm zusammengefasst und in der Anzeige 27 dargestellt sind. Dadurch wird ein Vergleich zwischen verschiedenen Prüfgegenständen 11 als solchen immer in Relation zu den jeweiligen Messstellen ermöglicht. In dem Diagramm ist auf der X-Achse die Rangfolge aufgetragen und auf der Y-Achse abweichend zur Anzeige gemäß Figur 4 eine Abweichung a in µm aufgetragen, die sich aus dem ermittelten Istwert abzüglich dem Sollwert ergibt. Die Nulllinie entspricht dem Sollwert gemäß der Kennlinie 35 in Figur 4. Alternativ kann die Rangachse auch als Merkmalsachse oder als neutrale Hilfsachse ausgegeben werden.

In dieser Anzeige 27 sind beispielhaft vier Kennlinien 42, 43, 44 und 46 dargestellt, die jeweils beispielhaft elf Messreihen an vier unterschiedlichen Prüfgegenständen 11 darstellen. Aus den unterschiedlichen Verläufen der Kennlinien 42, 43, 44, 46 lässt sich erkennen, welche Prüfgegenstände 11 die Anforderungen erfüllen und welche Prüfgegenstände oder deren einzelne Messstellen außerhalb der zulässigen Toleranz liegen. Die Kennlinie 43 weist eine sehr flache Steigung auf und umfasst somit nur geringe Abweichungen der Mittelwerte zum Sollwert. Diese Kennlinie 43 sowie auch die Kennlinien 42 und 44 liegen jeweils innerhalb der Toleranz zwischen dem oberen und unteren Grenzwert 32, 33. Die Kennlinie 46 zeigt, dass der Rangwert 10 auf dem oberen Grenzwert 32 liegt und der Rangwert 11 außerhalb des oberen Grenzwertes 32 liegt. Bei dem Rangwert 10 liegt nach der Normalverteilung ein Bereich der Messwerte innerhalb des Toleranzbereiches, wohingegen die andere Hälfte des Vertrauensbereiches außerhalb des oberen Grenzwertes 32 liegt.

Als zusätzliche Information ist zu ersehen, dass es sich beim Rangwert 10 und 11 um einen Ausreißer handelt, der als Schlechtteil definiert ist. Durch die Darstellung der Streuung zum Mittelwert ist ersichtlich, dass kein Messwert des Ranges 11 innerhalb der zulässigen Grenzlinien 32, 33 liegt. Durch die Anzeige 27 kann unmittelbar darauf geschlossen werden, dass der Prüfgegenstand 11, der zu einer Kennlinie 43 führt, von einem Lieferanten stammt, der ein Produkt mit hoher Qualität liefert. Die Prüfgegenstände 11 gemäß der Kennlinien 42 und 44 sind qualitativ schlechter als der Prüfgegenstand gemäß der Kennlinie 43 einzustufen. Jedoch liegen diese unter Berücksichtigung des Vertrauensbereiches immer noch innerhalb des oberen und unteren Grenzwertes 32, 33. Der Prüfgegenstand 11 gemäß der Kennlinie 46 liegt außerhalb des Gutbereiches und wird als Schlechtteil eingestuft.

Sofern der Vertrauensbereich, welcher durch die Kennlinien 38 und 39 dargestellt ist, innerhalb eines oberen und unteren Grenzwertes 32, 33 im Verhältnis zu den ermittelten Mittelwerten liegt, kann von einem Gutteil ausgegangen werden. Eine solche Anzeige 27 ermöglicht somit eine schnelle Aussage über die Produktfähigkeit, welche die einzelne Messung an einer oder mehreren Messstellen eines Produktes berücksichtigt. Die Produktfähigkeit ist des Weiteren durch eine Kenngröße Cp geprägt, welche sich aus einem Quotienten zwischen der Toleranz beziehungsweise dem oberen und unteren Grenzwert 32, 33 und dem Vertrauensbereich ergibt. Bei Kennwerten Cp < 1 liegt ein nicht vorhersehbares Prozessergebnis vor. Es ist deshalb das Ziel, den Kennwert gleich oder größer als eins zu erzielen. Dann sind Prozessergebnisse statistisch vorhersehbar. Dadurch lassen sich Rückschlüsse auf Fehlursachen gezielt ziehen. Bevorzugt wird ein Kennwert von Cp > 3 angestrebt.

Ein weiteres aus den Messreihen ableitbares Qualitätskriterium stellt die Rangwechselhäufigkeit der jeweiligen Messstellen gleicher Prüfgegenstände 11 dar. Je geringer die Rangwechselhäufigkeit ist, welche sich aus den Rangfolgen der Mittelwerte für die jeweiligen Messstellen eines jeweiligen Prüfgegenstandes 11 ergibt, desto gleichmäßiger ist die Qualität des Prüfgegenstandes 11. Bei beschichteten Prüfgegenständen 11 kann dann die Schlussfolgerung getroffen werden, dass nahezu gleiche Prozessverhältnisse vorliegen, durch welche bestimmte Messstellen eines Prüfgegenstandes mit der im Wesentlichen gleichen Schichtdicke versehen sind.

Die Ausgabe der Werte gemäß den Figuren 4 und 5 aufgrund der vorangegangenen Bildung der Mittelwerte von Einzelmessungen und Sortierung nach dem Rangwert ermöglicht eine schnelle und einfache Beurteilung des jeweiligen Prüfgegenstandes 11.

Das erfindungsgemäße Verfahren wird insbesondere auch zur statistischen Prozesskontrolle eingesetzt. Beispielsweise werden stichprobenartig innerhalb eines vorbestimmten Zeitintervalls eine vorbestimmte Anzahl von Teilen geprüft.

Die Prüfgegenstände 11 und die Messaufgabe beziehungsweise die Überwachung können vollständig unterschiedliche Anwendungsbereiche finden. Beispielsweise können zeitabhängige Veränderungen an einem Messgegenstand erfasst werden. Beispielsweise wäre dies bei der Einwirkung durch UV-Licht oder einem Medium auf eine Beschichtung der Fall. Derartige Zustandsänderungen oder weitere Zustandsänderungen können ebenfalls ermittelt und geprüft werden. Somit können auch zeitliche Faktoren in die Auswertung neben den rein faktisch zu messenden Faktoren einen Eingang finden.

Als weitere Anwendungsbeispiele können der Gleichlauf von Geräten oder Systemen überprüft und überwacht werden. Analoges gilt für die Überprüfung von Verfahrwegen oder Wiederholgenauigkeiten von Handhabungsgeräten oder die Präzision von automatischen Montageprozessen.

Durch das vorgenannte Verfahren wird in sehr einfacher Weise durch Ablauf von mehreren aneinandergereihten Bewertungsschritten der Einzelmessungen und der Messreihen von einem oder mehreren Messgegenstände veranschaulicht, welche Mittelwerte der Stichproben miteinander vergleichbar sind uns somit zusammengehören und welche Mittelwerte einzelne Untergruppen bilden, die möglicherweise außerhalb vorgegebener Toleranzen liegen. Die zugehörigen Werte zu den Untergruppen können einfach verifiziert werden, um entsprechend eine Korrektur vorzunehmen.

Alle vorbeschriebenen Merkmale sind jeweils für sich erfindungswesentlich und können beliebig miteinander kombiniert werden.

**Patentansprüche**

1. Verfahren zur Ausgabe von Messwerten in einer Anzeige (27) einer Anzeigeeinrichtung (26), bei dem die Messwerte durch eine Messvorrichtung (24) an einem oder mehreren Prüfgegenständen (11) erfasst werden, die in einer Auswerteeinrichtung, die einen elektronischen Rechner umfasst, ausgewertet werden

   - bei dem an einer vorgegebenen Anzahl von Messstellen (14 bis 21) am Prüfgegenstand (11) mehrere Messwerte erfasst werden,
   - bei dem für jede Messstelle (14 bis 21) aus der Anzahl der erfassten Messwerte ein Mittelwert ermittelt wird, **dadurch gekennzeichnet,**
   - **dass** die Mittelwerte der jeweiligen Messstellen (14 bis 21) von einem oder mehreren Prüfgegenständen (11) jeweils miteinander verglichen werden und diesen jeweils ein Rangwert zugeordnet wird, und
   - **dass** die Rangwerte nach deren Rang sortiert und entsprechend dem Rang- nach auf eine Gerade (30) projiziert werden, die zwischen einem minimalen und einem maximalen Mittelwert gebildet wird.

2. Verfahren nach Anspruch 1, **dadurch gekennzeichnet, dass** zu jedem Mittelwert auf der Geraden (30) ein Vertrauensbereich, dargestellt wird.

3. Verfahren nach einem der vorhergehenden Ansprüche, **dadurch gekennzeichnet, dass** In der Anzeige (27) die Im Grenzbereich des Vertrauensbereiches oder außerhalb des Vertrauensbereiches liegenden Messstellen oder Messwerte des oder der Prüfgegenstände (11) angezeigt werden.

4. Verfahren nach einem der vorhergehenden Ansprüche, **dadurch gekennzeichnet, dass** dem Benutzer zur Erfassung eines Rangwertes außerhalb der oberen und unteren Grenzlinie (32, 33) oder außerhalb des Vertrauensbereiches dieser in der Anzeige (27) abweichend von zumindest einem innerhalb des Vertrauensbereiches oder der oberen und unteren Grenzlinie (32, 33) liegenden Rangwert dargestellt und angezeigt wird.

5. Verfahren nach einem der vorhergehenden Ansprüche, **dadurch gekennzeichnet, dass** eine Streuung für die Messwerte zu den jeweiligen Mittelwerten angezeigt wird.

6. Verfahren nach einem der vorhergehenden Ansprüche, **dadurch gekennzeichnet, dass** der Vertrauensbereich auf einen vorbestimmten prozentualen Anteil eingestellt wird.

7. Verfahren nach einem der vorhergehenden Ansprüche, **dadurch gekennzeichnet, dass** jede Messreihe auf eine Normalverteilung der Einzelmesswerte geprüft wird.

8. Verfahren nach einem der vorhergehenden Ansprüche, **dadurch gekennzeichnet, dass** die Homogenität der Varianzen der Messreihen geprüft wird.

9. Verfahren nach einem der vorhergehenden Ansprüche, **dadurch gekennzeichnet, dass** die Anzahl der Messwerte von jeder Messstelle eines Prüfgenstandes (11) gleich ist.

10. Verfahren nach einem der vorhergehenden Ansprüche, **dadurch gekennzeichnet, dass** für die Mittelwerte von einzelnen Messstellen (14 bis 21) eine Signifikanzprüfung durchgeführt wird und die nicht signifikant voneinander verschiedenen Mittelwerte eine homogene Gruppe bilden und in gleicher Kennung in einem Bereich entlang der Y-Koordinate oder auf die Gerade (30) projizierend dargestellt werden.

11. Verfahren nach einem der vorhergehenden Ansprüche, **dadurch gekennzeichnet, dass** eine Signifikanzprüfung der Mittelwerte vor einer Serienproduktion in einem Vorlauf durchgeführt wird.

12. Anzeigeeinrichtung zur Durchführung des Verfahrens nach einem der Ansprüche 1 bis 11, **dadurch gekennzeichnet, dass** ein Anschluss (29) für eine Messvorrichtung (26) zur Durchführung von Einzelmessungen vorgesehen ist und eine Signalerfassungseinrichtung für die Messwerte aus Messsignalen der Einzelmessungen, die jeweils einer Messstelle (14 bis 21) eines Prüfgegenstandes (11) zugeordnet sind und mit einer Auswerteeinrichtung, die einen elektronischen Rechner umfasst und eine Anzahl von Messreihen mit einem oder mehreren Messwerten an einem oder mehreren Messstellen (14 bis 21) von einem oder mehreren Prüfgegenständen (11) erfasst, wobei die Auswerteeinrichtung aus der Anzahl von Messwerten an einer Messstelle (14 bis 21) Mittelwerte bestimmt und diese jeweils miteinander verglichen werden und ihnen jeweils ein Rangwert zugeordnet wird, und auf eine Gerade projizierend in einem Diagramm, bei dem die Mittelwerte nach deren Rang sortiert entlang der Geraden (30) aufgetragen sind, ausgibt.

13. Anzeigeeinrichtung nach Anspruch 12, **dadurch gekennzeichnet, dass** an dem Anschluss (29) eine als Messsonde (23) ausgebildete Messvorrichtung (24) zur Messung der Dicke dünner Schichten vorgesehen ist.

14. Anzeigeeinrichtung nach Anspruch 12 **dadurch gekennzeichnet, dass** die Messvorrichtung (24) In der Anzeigenvorrichtung (26) integriert ist.

**Claims**

1. A method for outputting measured values in a display (27) of a display device (26), in which the measured values are acquired by a measuring apparatus (24) on one or more test items (11), which are evaluated in an evaluating device comprising an electronic computer

    - acquiring at a predetermined number of measuring points (14 to 21) of a test item (11) a number of measured values,
    - determining for each measuring point (14 to 21) from the number of the acquired measured values, a mean value, **characterized in that**
    - the mean values of the respective measuring points (14 to 21) of one or more test items (11) are compared respectively with each other and each is assigned to a rank value and
    - the rank values are sorted by rank, and are projected corresponding to the rank onto a straight line (30) that is formed between a minimum and a maximum mean value.

2. The method as claimed in claim 1, **characterized in that** a confidence interval is displayed on the straight line (30) for each mean value.

3. The method as claimed in one of the preceding claims, **characterized in that** the measuring points or measured values of the test item(s) (11) that lie in the limit range of the confidence interval or outside the confidence interval are displayed on the display (27).

**4.** The method as claimed in one of the preceding claims, **characterized in that** a rank value in a fashion deviating from at least one rank value lying inside the confidence interval or the upper and lower limit line (32, 33) is displayed and shown to the user for the purpose of acquiring a rank value outside the upper and lower limit line (32, 33) or outside the confidence interval in the display (27).

**5.** The method as claimed in one of the preceding claims, **characterized in that** a scatter band for the measured values in relation to the respective mean values is displayed.

**6.** The method as claimed in one of the preceding claims, **characterized in that** the confidence interval is set to a predetermined percentage fraction.

**7.** The method as claimed in one of the preceding claims, **characterized in that** each measurement series is checked for a normal distribution of the individual measured values.

**8.** The method as claimed in one of the preceding claims, **characterized in that** the homogeneity of the variances of the measurement series is checked.

**9.** The method as claimed in one of the preceding claims, **characterized in that** the number of the measured values of each measuring point of a test item (11) is the same.

**10.** The method as claimed in one of the preceding claims, **characterized in that** a significance test is carried out for the mean values of individual measuring points (14 to 21), and the mean values not significantly different from one another and form a homogeneous group, are displayed with the same identification in a region along the Y-coordinate or in a fashion projected onto the straight line (30).

**11.** The method as claimed in one of the preceding claims, **characterized in that** the significance test of the mean values is carried out in a preliminary run before series production.

**12.** A display device for carrying out the method as claimed in one of claims 1 to 11, **characterized in that** a connection (29) is provided for a measuring apparatus (26) for carrying out individual measurements, and a signal acquisition device for the measured values from measurement signals of the individual measurements, which are respectively assigned to a measuring point (14 to 21) of a test item (11), and having an evaluation device that comprises an electronic computer and acquires a number of measurement series with one or more measured values at one or more measuring points (14 to 21) from one or more test items (11), the evaluation device determining mean values from the number of measured values at a measuring point (14 to 21), which are respectively compared and are respectively assigned to a rank value and outputting them, in a fashion projected onto a straight line, in a diagram on which the mean values are plotted sorted by rank on the straight line (30).

**13.** The display device as claimed in claim 12, **characterized in that** a measuring apparatus (24) designed as a measuring probe (23) and intended for measuring the thickness of thin layers is provided at the connection (29).

**14.** The display device as claimed in claim 12, **characterized in that** the measuring apparatus (24) is integrated in the display device (26).

**Revendications**

**1.** Procédé permettant d'émettre des valeurs de mesure dans une fenêtre d'affichage (27) d'un dispositif d'affichage (26), lors duquel les valeurs de mesure sont saisies sur un ou plusieurs objets testés (11) par un dispositif de mesure (24) et sont évaluées dans un dispositif d'évaluation comprenant un ordinateur électronique, lors duquel

- plusieurs valeurs de mesure sont saisies au niveau d'un nombre prédéfini de points de mesure (14 à 21) sur l'objet testé (11),
- une valeur moyenne est déterminée pour chaque point de mesure (14 à 21) à partir du nombre des valeurs de mesure saisies, **caractérisé en ce que**
- les valeurs moyennes des points de mesure respectifs (14 à 21) d'un ou de plusieurs objets testés (11) sont comparées respectivement entre elles et une valeur de rang leur est respectivement attribuée, et
- les valeurs de rang sont classées selon leur rang et sont projetées selon leur rang sur une droite (30) qui est tracée entre une valeur moyenne minimale et une valeur moyenne maximale.

**2.** Procédé selon la revendication 1, **caractérisé en ce qu'**un domaine de confiance est représenté pour chaque valeur moyenne figurant sur la droite (30).

**3.** Procédé selon l'une des revendications précédentes, **caractérisé en ce que** les points de mesure ou valeurs de mesure du ou des objets testés (11) situé (e)s dans la zone limite du domaine de confiance ou en dehors dudit domaine de confiance sont indiqué (e)s dans la fenêtre d'affichage (27).

4. Procédé selon l'une des revendications précédentes, **caractérisé en ce que**, dans le but qu'une valeur de rang située en dehors des limites supérieure et inférieure (32, 33) ou en dehors du domaine de confiance soit saisie par l'utilisateur, celle-ci est représentée ou affichée dans la fenêtre d'affichage (27) en fonction de son écart par rapport à au moins une valeur de rang située à l'intérieur du domaine de confiance ou des limites supérieure et inférieure (32, 33).

5. Procédé selon l'une des revendications précédentes, **caractérisé en ce qu'**une dispersion des valeurs de mesure par rapport aux valeurs moyennes respectives est affichée.

6. Procédé selon l'une des revendications précédentes, **caractérisé en ce que** le domaine de confiance est réglé sur un pourcentage prédéfini.

7. Procédé selon l'une des revendications précédentes, **caractérisé en ce que** chaque série de mesure est contrôlée quant à une distribution normale des valeurs de mesure individuelles.

8. Procédé selon l'une des revendications précédentes, **caractérisé en ce que** l'homogénéité des variances des séries de mesure est contrôlée.

9. Procédé selon l'une des revendications précédentes, **caractérisé en ce que** le nombre des valeurs de mesure obtenues sur chaque point de mesure d'un objet testé (11) est identique.

10. Procédé selon l'une des revendications précédentes, **caractérisé en ce qu'**un test de signification est réalisé pour les valeurs moyennes de certains points de mesure (14 à 21), et **en ce que** les valeurs moyennes qui ne diffèrent pas de manière significative entre elles forment un groupe homogène et sont représentées par le même identifiant dans une zone le long de la coordonnée y ou, par projection, sur la droite (30).

11. Procédé selon l'une des revendications précédentes, **caractérisé en ce qu'**un test de signification des valeurs moyennes est réalisé sur une pré-série avant une production en série.

12. Dispositif d'affichage permettant la réalisation du procédé selon l'une des revendications 1 à 11, **caractérisé en ce qu'**il est prévu une connexion (29) pour un dispositif de mesure (26) permettant de réaliser des mesures individuelles ainsi qu'un dispositif de saisie de signaux pour les valeurs de mesure obtenues à partir de signaux de mesure des mesure obtenues à partir de signaux de mesure des mesures individuelles, lesquelles sont attribuées respectivement à un point de mesure (14 à 21) d'un objet testé (11), avec un dispositif d'évaluation qui comprend un ordinateur électronique et saisit un nombre donné de séries de mesure avec une ou plusieurs valeurs de mesure obtenues à un ou plusieurs points de mesure (14 à 21) d'un ou de plusieurs objets testés (11), le dispositif d'évaluation déterminant, à partir du nombre de valeurs de mesure obtenues à un point de mesure (14 à 21), des valeurs moyennes, lesquelles sont respectivement comparées entre elles et auxquelles est respectivement attribuée une valeur de rang, et émettant celles-ci, par projection, sur une droite dans un diagramme dans lequel les valeurs moyennes, classées selon leur rang, sont reportées le long de la droite (30).

13. Dispositif d'affichage selon la revendication 12, **caractérisé en ce qu'**il est prévu sur la connexion (29) un dispositif de mesure (24) réalisé en forme de sonde de mesure (23) permettant de mesurer l'épaisseur de couches fines.

14. Dispositif d'affichage selon la revendication 12, **caractérisé en ce que** le dispositif de mesure (24) est intégré dans le dispositif d'affichage (26).

Fig. 1

Fig. 2

| Einzel-messung | Reihe 1 | Reihe 2 | Reihe 3 | Reihe 4 | Reihe 5 | Reihe 6 |
|:---:|:---:|:---:|:---:|:---:|:---:|:---:|
| 1 | 47 | 55 | 60 | 61 | 52 | 76 |
| 2 | 54 | 59 | 45 | 45 | 47 | 75 |
| 3 | 50 | 62 | 58 | 56 | 58 | 70 |
| 4 | 49 | 70 | 47 | 53 | 52 | 76 |
| 5 | 51 | 71 | 48 | 68 | 64 | 79 |
| 6 | 54 | 90 | 56 | 66 | 68 | 63 |
| 7 | 50 | 88 | 54 | 58 | 73 | 59 |
| 8 | 48 | 69 | 62 | 67 | 67 | 76 |
| 9 | 47 | 69 | 39 | 55 | 67 | 65 |
| 10 | 39 | 65 | 44 | 67 | 69 | 70 |
| Mittelwert | 48,8 | 69,8 | 51,3 | 59,6 | 61,7 | 70,9 |
| Std.abw. | 4,16 | 11,36 | 7,73 | 7,57 | 8,82 | 6,67 |
| Rang | 1 | 5 | 2 | 3 | 4 | 6 |

# Fig. 3

13

Fig. 4

EP 1 797 398 B1

Fig. 5a

Fig. 5b

Fig. 6

**IN DER BESCHREIBUNG AUFGEFÜHRTE DOKUMENTE**

**In der Beschreibung aufgeführte Patentdokumente**

- US 20020173935 A1